# EUROPEAN PATENT APPLICATION

(11) **EP 1 080 847 A2**
(43) Date of publication of application: **07.03.2001**
(21) Application number: 00306629.7
(22) Date of filing: 03.08.2000
(51) Int. Cl.: B25B 21/00

(54) **Fastening device**

(30) Priority: 05.08.1999 US 369006
(71) Applicant: Junkers, John K., Union, New Jersey 07083 (US)
(72) Inventor: Junkers, John K., Union, New Jersey 07083 (US)
(74) Representative: Newby, Martin John

(57) **Abstract**

A fastening device comprising a bolt member (2), a nut (9) to be turned, and a torque power tool (20) operative for simultaneously applying torque to the bolt member (2) and torque to the nut (9) to be turned, so that during tightening of the fastener and turning of the nut, a free shank of the bolt member does not turn or twist due to torsion or side load. The bolt member includes a rod (3) and a washer (6) having an axis, the rod having at least two portions located substantially at its ends, one of the portions being a threaded portion (4) located at one of the ends of the rod (3) to connect with the nut (9) to be turned while another of the portions is located at the other of the ends of the rod and is adapted to connect with an object. The washer (6) has opposite upper and lower bearing faces extending substantially perpendicular to the axis and being subjected to turning friction. The upper bearing face is adapted to cooperate with a bearing face of the nut to be turned and the lower bearing face is adapted to cooperate with a bearing face of one of the at least two parts. The torque power tool (20) has a first drive structure (21) connectable with the bolt member to apply a torque to the one portion of the rod and to the washer in one direction, and a second drive structure (26) connectable with the nut to be turned to apply an equal force in an opposite direction, so that during operation of the torque power tool a turning friction of the washer is added to a turning friction of the one portion of the rod, so that the nut to be turned turns while the bolt member remains stationary.

## Description

This invention relates generally to a fastening device for fastening bolts, nuts and the like.

Fasteners such as bolts and nuts are well known. When the nut is tightened by means of torque, the bolt has a tendency to move along with the nut, while the reaction force applied by a torque power tool to a nearby stationary object applies a side load to the fastener to be tightened. The thread friction between a bolt and nut is such, that it has the tendency to drag not firmly connected bolts along where the nut is torqued. In other words, the turning friction created by the nut to be turned in the bolt thread is at times greater than the turning friction of a counter-nut connected to the bolt on the other side of the parts to be connected, despite the fact that a turning counter-nut is subject to facial friction. Even if there is a washer underneath the nut to be turned, it too can drag along while the nut is turned.

When a bolt is threaded into a blind hole in the bottom part of the parts to be connected, it too has a tendency to turn along. For the above reasons, industry applies backup wrenches which stop the bottom nut from turning along or Allen keys that insert into a female hexagonal recess on top of the blind stud to hold the stud from turning inside the threaded blind hole. This procedure is not always successful as the holding force varies with peak torque requirements resulting from flaws in the bolt thread. However, if it works on occasion or if the other bolt end is sturdily connected, then torsion builds up in the bolt shank apart from the side load created by reacting against the stationary object located distant from the bolt axis. On long bolts this can result in a loss of torque when the bolt unwinds. Thus, the turning of the bolt along with the nut, the build up of bolt torsion and the side load applied are undesirable. It is therefore necessary to find a way to contravene the turning friction of the nut to be turned and the side load in such a way that the bolt remains stationary and the free bolt shank is not subjected to any torsion or side load.

Since the side load is created through an offset reaction, the reaction force needs to become coaxial with the action force. It is proposed to accomplish this by increasing the bolt turning friction relative to the nut turning friction so that the bolt member with its associated parts can be used as a stationary object. As the turning friction of the nut is shared between the threaded engagement with the bolt and the facial engagement with the parts to be connected or the washer, the turning friction of the bolt needs also to be shared. When a bolt is threaded into a blind hole or connected with a counter nut there are two frictional forces to be taken into account, one being the friction between the screw threads of the bolt and blind hole or counter nut and the other being the friction between the screw thread of the bolt and the nut to be turned. As the bearing face friction of the nut usually exceeds the threaded friction on the bottom end of the bolt, the bolt has a tendency to turn along where the nut is torqued. If a turning force is applied to a nut and an opposite and equal turning force is applied to a bolt, either one ends up turning. Therefore, it is necessary to either increase the bolt turning friction or to decrease the nut turning friction, so that when two equal but opposite forces are applied to the bolt and the nut, only the nut turns. It is proposed to accomplish this by making the turning friction of the bolt rod subject to the turning friction of the washer. Yet, this by itself does not mean anything because, if a turning force is only applied to the nut, the bolt and the washer still can turn along and a side load is still applied to the bolt. Thus an additional tool, such as a torque power tool, is required which has an action force and an equal but opposite reaction force to guarantee that only the nut turns. By applying a torque power tool to the fastener in such a way that the turning force of the torque power tool in one direction is exerted to the nut and the equal but opposite turning force of the torque power tool is exerted to the bolt rod and the washer, only the nut turns.

A known fastener is disclosed in US-A-5,318,397. However it however has the disadvantage that its inner sleeve needs to be relatively radially thick at the point where it is connected to a washer, as the holding force applicable to the inner sleeve is transferred by the inner sleeve to the washer. Therefore, this connection can see in some instances the entire, opposite turning force applied to the outer sleeve. In addition, such a known fastener is relatively costly to produce.

Accordingly, it is an object of present invention to provide a fastening device which avoids the disadvantages of the prior art.

In keeping with these objects and with others which will become apparent hereinafter, there is provided according to the present invention a fastening device as claimed in the ensuing claim 1.

When the fastening device is designed in accordance with the present invention and includes the bolt member, the nut and the torque power tool as defined hereinabove, it eliminates in use turning of the rod or of the washer along with turning of the nut.

When the tool of the fastening device is used twisting of the free shank of the bolt rod due to torsion is eliminated. Furthermore, the side load resulting in torque and present in prior art devices is eliminated.

When the fastener, including the bolt and the nut, is being tightened by means of the tool, the friction of the bolt relative to the friction of the nut changes. Also, the changed friction of the bolt is kept at all times in the same relation to the friction of the nut, even when the friction of the nut becomes temporarily greater due to kinks or other discrepancies in the thread.

With the fastening device according to the invention, the turning friction between the nut and the bolt is brought closer and it is possible to use standard commercial parts. Furthermore a smaller diameter and a less expensive construction are feasible.

Embodiments of the invention will now be described, by way of example only, with particular reference to the accompanying drawings, in which:
Figures 1a is a side view of a bolt and a nut of an inventive fastening device in sections;

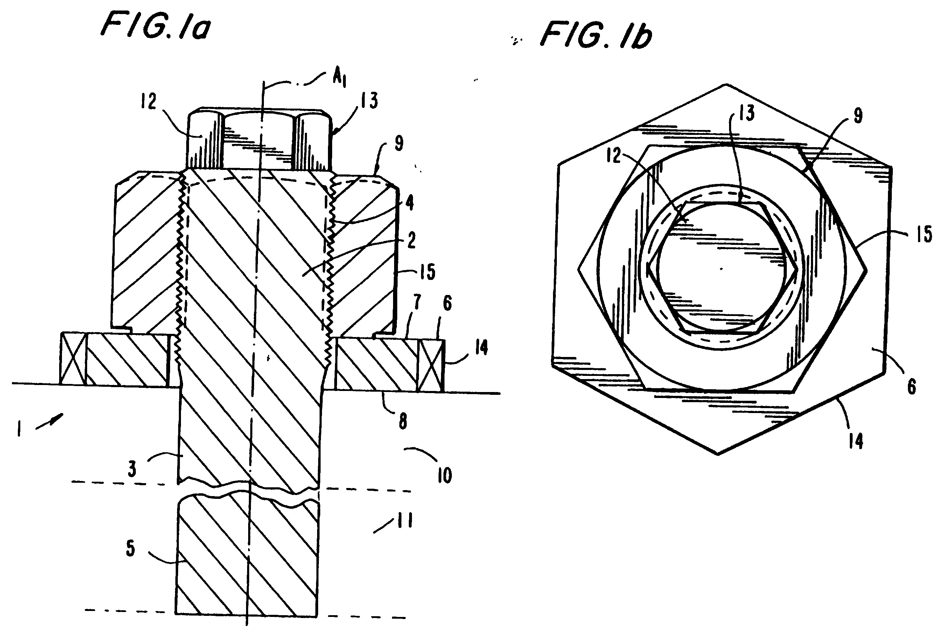

Figure 1b is a plan of the bolt and nut of the inventive device shown in Figure 1a;
Figure 2 is a view showing a torque power tool cooperating with the bolt and the nut of Figures 1a and 1b;
Figure 3a is a section of a bolt and a nut of a fastening device in accordance with another embodiment of the present invention;
Figure 3b is a plan of the bolt and the nut of the fastening device shown in Figure 3a;
Figure 4 is a view showing a torque power tool applied to the bolt and the nut of Figures 3a and 3b;
Figures 5a and 5b are a side view and a sectional view, respectively, of a torque power tool applied to a bolt and a nut in accordance with a further embodiment of the present invention;
Figures 6a and 6b are a side view and a sectional view, respectively, of a torque power tool applied to a bolt and a nut in accordance with still another embodiment of the present invention.

A fastening device in accordance with the present invention has a bolt member or bolt means which is identified as a whole with reference numeral 1 and includes a bolt 2. The bolt 2 has a rod 3 with two portions 4 and 5. One portion 4 is threaded and is located at or adjacent one end of the rod 3, while the portion 5, which also can be threaded, is located at the other end of the rod. The bolt means or bolt member 1 further has a washer 6 having two bearing faces which are substantially perpendicular to an axis A₁ of the bolt and are subjected to turning friction. The washer 6 has an upper bearing face 7 and a lower bearing face 8.

The fastening device further has a nut 9 connected with the threaded portion 4 of the rod 3 by an inner thread and has a lower bearing surface cooperating with the upper bearing surface 7 of the washer 6. The nut 9 and the bolt 2 are used to tighten upper and lower parts 10 and 11 with one another. The lower bearing face of the washer 6 cooperates with the upper part 10.

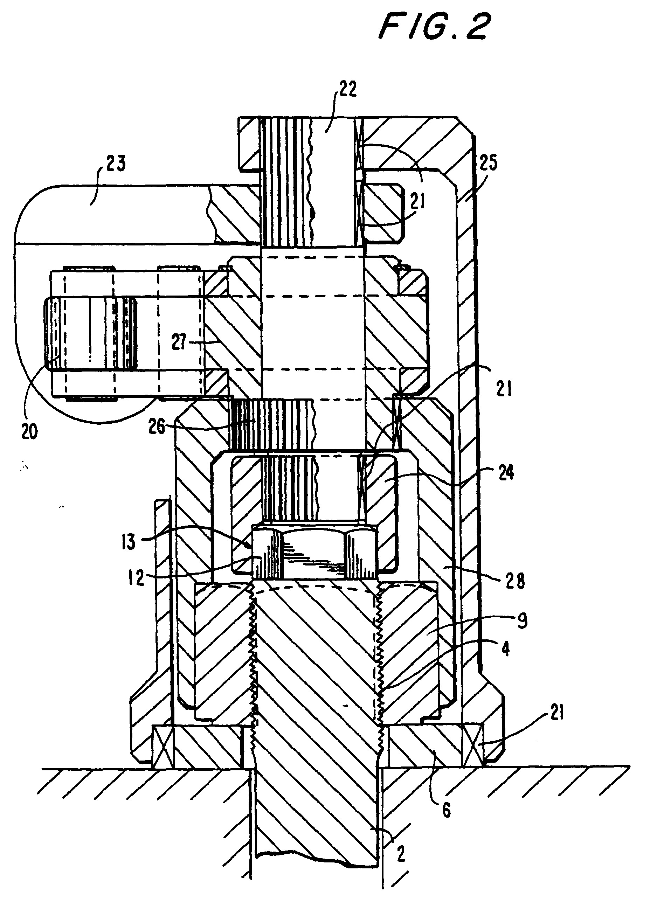

As can be seen from the drawings, the threaded portion 4 has engaging means 12 above an externally screw threaded part of the portion 4. The engaging means can be a polygonal outer surface 13 which forms a connection to a first drive means of a torque power tool 20 (see Figure 2). The washer 6 has an outer polygonal surface 14 which also forms a connection with the first drive means of the torque power tool. Finally, the nut 9 has an outer polygonal surface 15 which forms a connection with a second drive means of the torque power tool.

Figure 2 shows the torque power tool 20 cooperating with the bolt member 1 and the nut 9. The torque power tool 20 has first drive means identified by reference numeral 21. The first drive means first of all are connected to the threaded portion 4 of the rod 2 of the bolt 3. For this purpose the first drive means include a shaft 22 which is non rotatably engaged, for example by polygonal formations such as splines or the like, with a housing 23 of the tool 20 and has a lower portion which non rotatably supports a socket 24, for example by interengaging polygonal formations such as splines or the like. The socket 24 has an inner polygonal opening with which it is fitted on the outer polygonal surface 13 of engaging means 12 above the threaded part of the portion 4. The first drive means 21 also include an outer socket 25 which is non rotatably connected, for example by polygonal formations such as splines or the like, with the shaft 22 and has a lower end having a polygonal inner opening with which it is fitted over the polygonal outer surface of the washer 6. Therefore, the first drive means 21 are connected to the engaging means 12, which includes the bolt 2, and the washer 6 to apply a torque in one direction to the threaded portion 4 of the rod 3 and to the washer 6.

The torque power tool 20 further has second drive means 26 which include a ratchet 27 turnable by a drive (not shown) which may, for example be pneumatic or hydraulic through a pawl-ratchet engagement and provided, for example, with outer polygonal formations such as splines or the like, and a socket 28 which is non rotatably connected with the ratchet 27 by interengaging splines at the upper end and also has a lower end with an inner polygonal opening with which it is fitted on the outer polygonal surface 15 of the nut 9. The second drive means 26 are connected with the nut 9 to apply an equal torque in the opposite direction. Thus, while the drive means 21 of the torque power tool 20 apply a torque to the threaded portion 4 of the rod 3 and to the washer 6, the second drive means 26 of the torque power tool apply an equal force to the nut 9 but in the opposite direction. During operation of the tool, the turning friction of the washer 6 is added to the turning friction of the threaded portion 4 of the rod 3, so that the nut 9 to be turned turns while the bolt member 1 remains stationary.

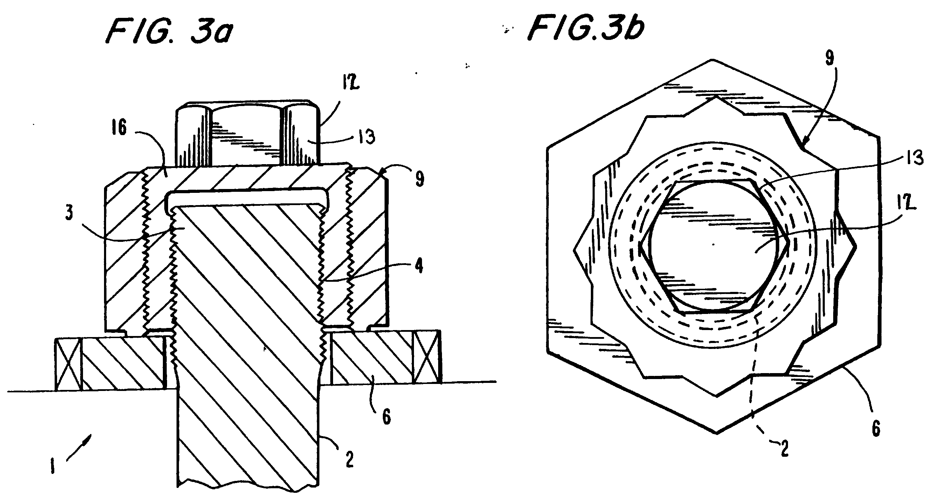

In the fastening assembly in accordance with the embodiment of Figures 3a and 3b, the parts which are identical to the corresponding parts to the first embodiment are identified with the same reference numerals. In this embodiment, it is not necessary to change a commercially available bolt. The bolt has an inner sleeve 16 having outside threads forming the threaded portion 4 of the rod 3 to which the nut 9 is connected. The inner sleeve 16 is provided with an inner thread which engages with the thread of the rod 3. The inner sleeve 16 also has engaging means 12 which can be a polygonal surface 13.

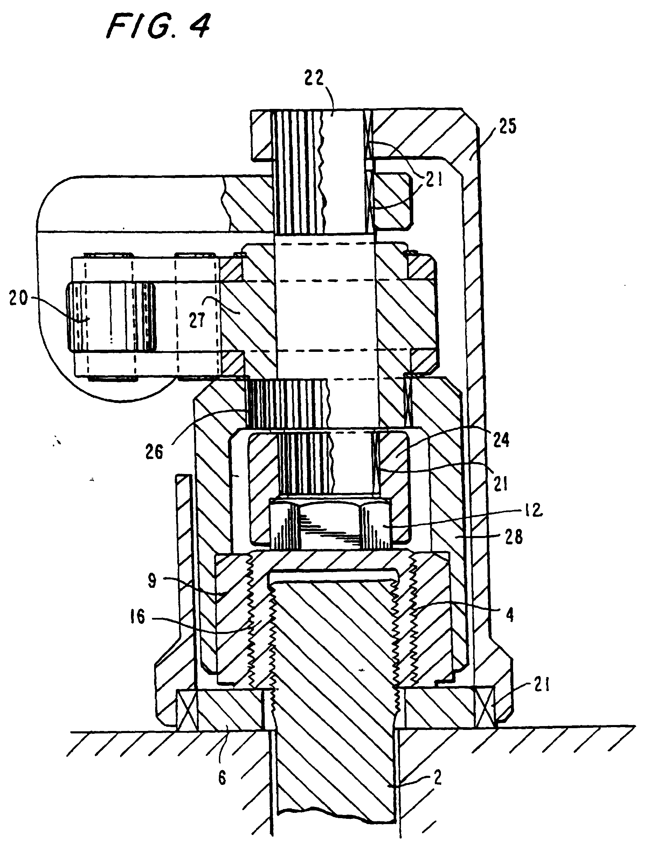

The torque power tool 20 for cooperation with the bolt member and the nut of Figures 3a and 3b is shown in Figure 4. It substantially corresponds to the torque power tool of Figure 2. However, in the embodiment shown in Figure 4, the socket 24 having an inner polygonal opening engages the polygonal surface of engaging means 12 which is arranged not on the rod but, instead, on the inner sleeve 16, which in turn is in engagement with the rod 3 of the bolt 2. In this construction also the first drive means 21 apply a torque to the threaded portion 4 of the rod 3, and also to the washer 6, while the second drive means 26 apply an equal torque in the opposite direction to the nut 9.

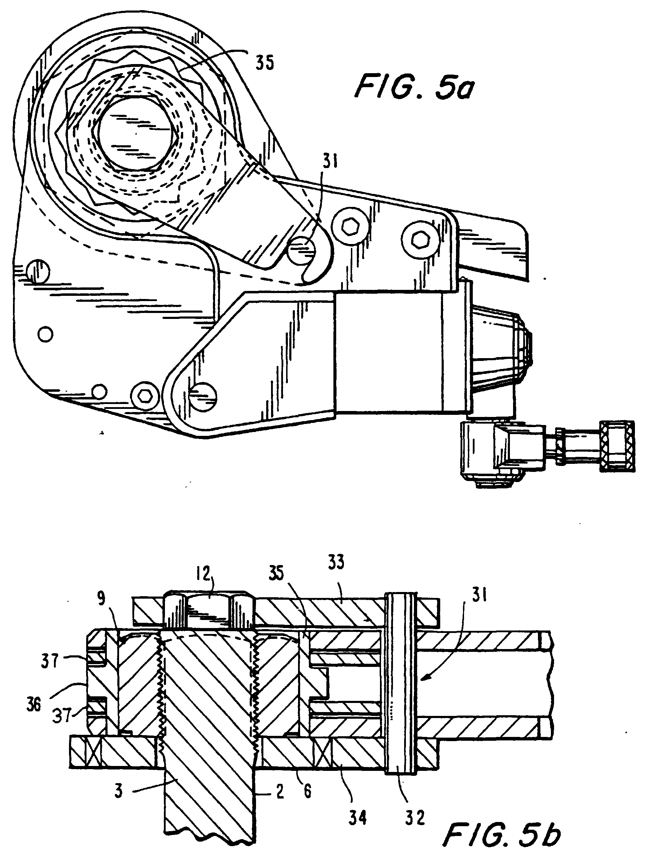

A fastening device shown in Figures 5a and 5b also has first drive means identified by reference numeral 31. The first drive means include a pin 32 non-rotatably connected to the housing of the tool, a first lever 33 having a right end (as viewed in Figure 5a) non-rotatably connected to the pin 32 and a left end (as viewed in Figure 5b) provided with an inner hexagonal opening with which it is fitted over the hexagonal surface 13 of the engaging means 12, and a second lever 34 having a first end which is non-rotatably connected with the pin 32 and a second end having an inner polygonal opening with which it is fitted over the outer polygonal surface 14 of the washer 6. The torque power tool further has second drive means 35 which include a ratchet 36 located between drive plates 37 and turnable from a drive through a pawl-ratchet engagement. The ratchet 36 has an inner polygonal opening in which it is fitted on the outer polygonal surface of the nut 9. In this embodiment the first drive means 31 also apply a torque in one direction to the threaded portion 4 of the rod 3 and to the washer 6, while the second drive means 35 apply an equal torque, but in the opposite direction, to the nut 9.

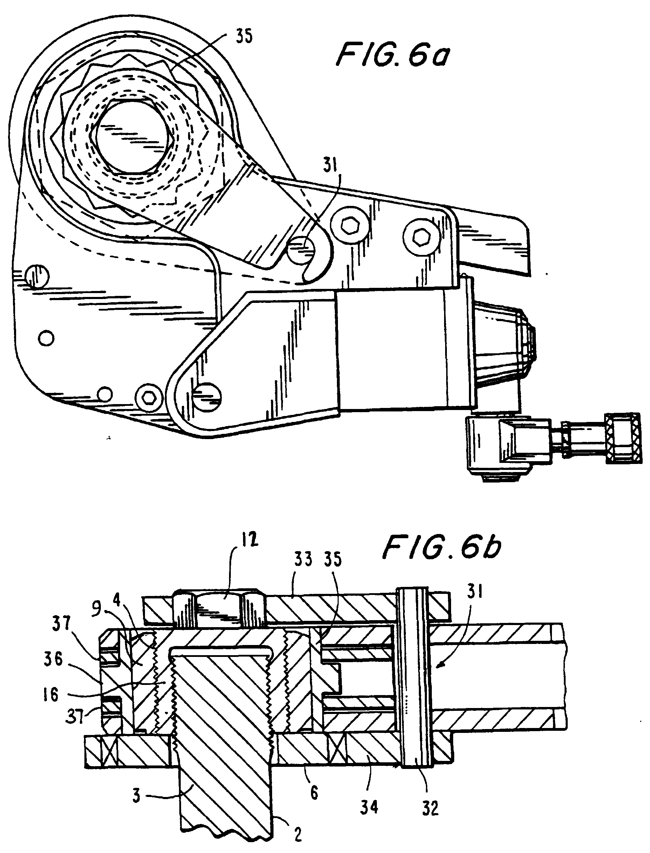

The embodiment shown in Figures 6a and 6b substantially corresponds to the embodiment of Figures 5a and 5b. The difference in the embodiment shown in Figures 6a and 6b from the embodiment in Figures 5a and 5b is that here the ratchet is fitted with its inner polygonal opening on the outer polygonal surface of the nut 9 of Figures 3a and 3b, which engages with its inner thread the threaded portion 4 of the rod 3 that is provided with the engaging means 12. Here also the first drive means 31 apply a torque in one direction to the threaded portion 4 and to the washer 6, while the second drive means 35 apply an equal torque in the opposite direction to the nut 9.

In all embodiments of the present invention, the bolt twist is eliminated due to torsion by use of the first drive means that assures that the bolt member remains stationary when a reaction force is applied to the bolt member, by use of the second drive means that assures that only the nut turns when the opposite and equal action force of the tool is applied to it. The invention is intended not only to cover the cases described above where the first drive means applies torque directly to the one portion of the rod 2 and directly to the washer 6 but also the case where the first drive means applies torque directly only to the one portion of the rod 2 and applies torque indirectly to the washer 6 (or vice versa where the first drive means applies torque directly only to the washer 6 and indirectly to the one portion of the rod 2).

## Claims

1. A fastening device comprising a bolt member (2); a nut (9) to be turned; and a torque power tool (20) operative for applying a torque to said bolt member and torque to said nut to be turned simultaneously, so that, during tightening of said fastening device and turning of said nut, a free shank of said bolt member does not turn or twist due to torsion or side load, said bolt member including a rod (3) and a washer (6) having an axis (A₁), said rod having at least two portions located substantially at its ends, one of said portions being a threaded portion (4) and located at one of said ends of said rod to connect with said nut (9) to be turned while another of said portions located at the other of said ends of said rod is adapted to connect with an object, said washer (6) having two opposite bearing faces extending substantially perpendicular to said axis and being subjected to turning friction, said bearing faces including an upper bearing face adapted to cooperate with a bearing face of said nut (9) to be turned and a lower bearing face adapted to cooperate with a bearing face of one of said at least two parts, said torque power tool (20) having first drive means (21) connectable with said bolt member (2) to apply a torque to said one portion (4) of said rod and to said washer (6) in one direction, and second drive means (26) connectable with said nut (9) to be turned to apply an equal force in an opposite direction, so that during operation of said torque power tool a turning friction of said washer (6) is added to a turning friction of said one portion (4) of said rod, so that said nut (9) to be turned turns while said bolt member (2) remains stationary.

2. A fastening device according to claim 1, wherein said one threaded portion of said rod of said bolt member comprises a threaded sleeve (16).

3. A fastening device according to claim 2, wherein said threaded sleeve (16) has an inner screw thread connected to an external screw thread of said rod (3) and an outer screw thread on which said nut (9) is screw threadedly connected.

4. A fastening device according to claim 1, 2 or 3, wherein said first drive means (21) is coaxial with said second drive means (26) of said torque power tool.

5. A fastening device according to any one of the preceding claims, wherein said second drive means (26) turns outside of said first drive means.

6. A fastening device according to any one of claims 1 to 4, wherein said second drive means (26) turns inside said first drive means (21).

7. A fastening device according to claim 5 or 6, wherein said first drive means are connected with said one threaded portion of said rod and with said washer (6).

8. A fastening device according to any one of claims 1 to 4, wherein said first drive means has first driving means connected with said one threaded portion of said rod and second driving means connected with said washer (6).

9. A fastening device according to claim 8, wherein said second drive means (26) turns outside of said first driving means and inside of said second driving means.

10. A fastening device according to claim 8, wherein said first driving means are located inside said second drive means (26) and said second driving means are located outside said second drive means.
